# EUROPÄISCHE PATENTSCHRIFT

(11) **EP 2 788 166 B1**
(45) Veröffentlichungstag und Bekanntmachung des Hinweises auf die Patenterteilung: **13.02.2019**
(21) Anmeldenummer: 12797874.0
(22) Anmeldetag: 03.12.2012
(51) Int. Cl.: B29C 45/27, B29C 45/26

(54) **HEISSKANAL-VERTEILERANORDNUNG FÜR EIN HEISSKANALSYSTEM**
HOT CHANNEL DISTRIBUTOR ARRANGEMENT FOR A HOT CHANNEL SYSTEM
ENSEMBLE DISTRIBUTEUR POUR UN SYSTÈME À CANAUX CHAUDS

(30) Priorität: 05.12.2011 DE 102011056060
(43) Veröffentlichungstag der Anmeldung: 15.10.2014
(73) Patentinhaber: EWIKON Heisskanalsysteme GmbH, 35066 Frankenberg (DE)
(72) Erfinder: EIMEKE, Stefan, 35066 Frankenberg (DE); POMSTRA, Henk, Jan, NL-6922 AV Duiven (NL)
(74) Vertreter: Specht, Peter
(86) Internationale Anmeldenummer: PCT/EP2012/074285
(87) Internationale Veröffentlichungsnummer: WO 2013/083533

(56) Entgegenhaltungen:
- EP-A1- 2 279 846
- WO-A1-2011/004418
- DE-A1-102009 021 794
- JP-A- S61 188 118
- JP-A- 2008 062 521
- US-A1- 2009 191 300
- US-B1- 6 461 140

## Beschreibung

Die Erfindung betrifft eine Heißkanal-Verteileranordnung für ein Heißkanalsystem.

Zum allgemeinen technologischen Hintergrund der Technologie von Heißkanalsystemen seien zunächst die DE 29 38 832 und die WO 2011/004418 A1 genannt.

Um mehrere Formnester anzuspritzen, sind demnach mehrere Düsenanordnungen erforderlich, ggf. mit Verschlussnadeln versehen, deren Position auf die des jeweiligen Formnestes einzustellen ist.

In der US 5,540,580 wird ein Heißkanal-Einspritzsystem beschrieben, welches für ein sog. "blow molding", d.h. für ein Blas-Einspritzverfahren ausgelegt ist, um hohle Behälter wie Kunststoffflaschen herzustellen. In der US 5,540,580 wird offenbart, dass mehrere Verteilerblöcke beweglich zueinander angeordnet sein können, wobei der Anpressdruck zwischen dem Eintritt bzw. der Angußöffnung des Hauptverteilerkanalsystems und dem einzigen Austritt dazu genutzt werden kann, um die Anordnung abzudichten.

Zum Stand der Technik sei ferner auf die US 5,000,675 verwiesen, aus der es bekannt ist, an einem Verteilerblock mehrere jeweils um zwei Drehachsen verschwenkbare Düsenanordnungen anzuordnen. Die Düsenanordnungen weisen jeweils eine Austrittsöffnung für die Schmelze auf, aus denen die Schmelze in Formnester einer Spritzgußform austritt bzw. geleitet wird. Die verschwenkbaren Düsenanordnungen müssen mittels zwei Klemmbacken, die von Schrauben durchsetzt sind, in ihrer jeweiligen Position fixiert werden. Nachteilig sind die derart nur eingeschränkte örtliche Beweglichkeit der Düsenanordnungen bzw. -körper, die vielen Anwendungsfällen nicht gerecht wird und die für die herrschenden hohen Drücke nur bedingt geeignete Fixierung der Düsenanordnung in ihrer Endposition zum Durchführen des eigentlichen Spritzvorganges. Insbesondere ist auch keine Längenverstellung der Düsenanordnungen relativ zueinander möglich und auch kein Ausgleich bei einer thermischen Ausdehnung. Daher werden die Bauteile des System nicht nur mit den hohen Drücken die für das Spritzgießen erforderlich sind belastet, sondern müssen zusätzlich auch die Spannungen die durch die thermische Ausdehnung entstehen aufnehmen. Diese hohen Belastungen haben einen negativen Einfluss auf die Standzeit des Heißkanalsystems.

Als gattungsgemäß sei ferner die DE10 2009 021794 A1 genannt.
Gegenüber dem zuletzt genannten gattungsgemäßen Stand der Technik soll eine optimierte Mehrfachdüsen-Heißkanalverteileranordnung geschaffen werden, die auf einfachere Weise ein möglichst weitgehendes unabhängiges Einstellen mehrerer Heißkanaldüsen in einem relativ großen Flächenbereich zulässt und bei der der Aufbau der thermischen Spannungen im Heißkanalsystem weitestgehend vermieden wird.
Die Erfindung löst diese Aufgabe durch den Gegenstand des Anspruchs 1. Vorzugsweise ist - um die Gegenstände der Ansprüche praktisch umzusetzen - an jedem Nebenverteilerblock wenigstens eine der Düsenanordnungen vorgesehen, wobei die Relativposition zumindest zwischen dem oder den Haupt- und Nebenverteilerblock-/blöcken bzw. den entsprechenden Armen jeweils nur im beheizten Betriebszustand des Heißkanalsystems durch Wärmeausdehnung direkt im Bereich der zweiten Drehachsen klemmend fixiert wird bzw. ist. Im kalten Zustand und jedenfalls noch während des anfänglichen Erwärmens ist dagegen eine Änderung der Winkelstellung zwischen dem wenigstens einen Haupt- und dem wenigstens einen daran angeordneten Nebenverteilerarm vorteilhaft möglich insbesondere wenn dieser Winkel ungleich 0° oder ungleich 180° ist. Vorzugsweise werden Positionen eingestellt, bei welchen der jeweilige Hauptverteilerarm und der daran gelenkig angeordnete Nebenverteilerarm nicht auf einer Gerade liegen, d.h. der Winkel zwischen Ihnen beträgt vorzugsweise nicht 0° oder 180°. Das Merkmal f) trifft daher jedenfalls bei Winkeln ungleich 0° und 180° zwischen dem Hauptverteilerarm und dem jeweils zugeordneten Nebenverteilerarm zu. Der Ort der zweiten Drehachsen kann sich beim Erwärmen (vorzugsweise mit einer Heizeinrichtung, insbesondere auf 180 - 350° C) vorteilhaft noch verändern, so dass auf einfache Weise ein Dilatationsausgleich erfolgt. Fixiert sind nach einem Einstellvorgang und nach einem nachfolgenden Zusammenbau des Systems samt dem umgebenden Werkzeug bereits vor einem Erwärmen des Systems auf die zum Spritzen erforderliche Betriebstemperatur jeweils die erste Drehachse D1 des wenigstens einen Hauptverteilerblockes und die Orte des Schmelzeaustritts, also die Heißkanaldüsen an den Nebenverteilerblöcken, nicht aber die zweiten Drehachsen der Nebenverteilerarme an dem Hauptverteilerblock.

Durch die vorzugsweise rein klemmende Fixierung im angrenzenden Werkzeug kann auf die nach der US 5,000,675 im Bereich der Schwenkachsen vorgesehenen separaten Klemmbacken verzichtet werden. Stattdessen wird im kalten - d.h. nicht klemmenden Zustand des Systems - zunächst die Einstellung der Düsenanordnungen entsprechend zu der jeweiligen Position der Formnester vorgenommen. Die Fixierung dieser Position wird ohne die Notwendigkeit, irgendwelche Fixiermittel wie Schrauben betätigen zu müssen, im erwärmten Zustand bzw. im auf Betriebstemperatur erwärmten Zustand allein durch einen Klemmsitz infolge von Wärmeausdehnung erreicht, wobei die Klemmstellen vorzugsweise direkt oberhalb und unterhalb bzw. beidseits des Schwenklagers bzw. Schwenkbereiches zwischen den Haupt- und Nebenverteilerarmen ausgebildet sind, so dass eine direkte Klemmwirkung am Ort der Relativbeweglichkeit erreicht wird, die auch unter hoher Druckbeaufschlagung genügend dicht ist.

Sollen mehr als zwei Düsenanordnungen eingesetzt werden, ist es besonders vorteilhaft, wenn zwei oder mehr der Hauptverteilerblöcke vorgesehen sind und wenn diese zwei oder mehr Hauptverteilerblöcke unabhängig voneinander und relativ zueinander um die erste Drehachse bzw. eine erste gemeinsame Drehachse quer zur Haupterstreckung der Hauptverteilerblöcke schwenkbar sind.

Nach einer vorteilhaften Weiterbildung der Erfindung weist jeder Hauptverteilerblock zwei sich quer zur ersten Drehachse in entgegengesetzte Richtungen erstreckende Hauptverteilerarme auf. Die Enden der Hauptverteilerarme sind vorzugsweise auf einem Kreis beweglich bzw. können auf einem Kreis um ein gemeinsames Zentrum - die erste Drehachse - bewegt werden.

Nach einer vorteilhaften Weiterbildung insbesondere dieses Gedankens ist an jedem der Hauptverteilerarme vorzugsweise jeweils einer der Nebenverteilerarme schwenkbar angeordnet, so dass ausgehend von der mit dem Hauptverteilerarm jeweils auf einem überfahrbaren Kreis eingestellten Grobposition eine Feinjustierung innerhalb eines Ringsegmentes möglich ist. Derart sind die Enden der Nebenverteilerarme um zweite Drehachsen der Hauptverteilerarme schwenkbar und diese zweiten Drehachsen sind wiederum auf einem Kreis um die erste Drehachse bzw. um einen mittigen Verteilerabschnitt drehbar bzw. verschwenkbar.

Zur Erhöhung der Dichtigkeit ist es vorteilhaft, wenn im Übergangs- bzw. Anlagebereich der Verteilerkanäle zwischen den Haupt- und Nebenverteilerarmen Dichtmittel ausgebildet sind. Diese Dichtmittel erfüllen vorzugsweise wenigstens eines oder mehrere folgender Merkmale:
- zwischen wenigstens jeweils einen der Haupt- und Nebenverteilerarme ist in deren Anlagebereich eine Schmelzeleithülse gesetzt;
- es ist ein hülsenartiger Vorsprung an dem einen Arm (Nebenverteilerarm bzw. Hauptverteilerarm) ausgebildet, der in eine entsprechende Ausnehmung des anderen Arms (Haupt- bzw. Nebenverteilerarm) eingreift, und/oder
- zwischen wenigstens jeweils einem der Haupt- und Nebenverteilerarme ist in deren Anlagebereich ein Dichtring angeordnet.

Derart können jeweils sowohl eine hohe Dichtigkeit als auch eine gewisse vorteilhafte Relativbeweglichkeit zumindest während des Aufwärmens des Systems mit jeweils einfachen Mitteln realisiert werden.

Nach einer weiteren besonders vorteilhaften Weiterbildung der Erfindung ist einseits oder es sind besonders bevorzugt beidseits der Gelenkbereiche zwischen den Haüpt- und Nebenverteilerarmen Andruckelemente, insbesondere Ringe, an die Haupt- und Nebenverteilerarme angesetzt - beispielsweise angeschraubt -, welche vorzugsweise ebene Anlageflächen ausbilden und zur Anlage an den korrespondiert ausgebildeten (beispielsweise ebenfalls ebenen) Werkzeugelementen ausgelegt sind.

Derart kann eine besonders saubere und definierte Krafteinleitung zur Realisierung eines Klemmsitzes der Gelenkbereiche zwischen den Haupt- und Nebenverteilerarmen der Anordnung zwischen Elementen des umgebenden Heißkanalsystems im erwärmten bzw. heißen Betriebszustand der Anordnung erfolgen.

Anzumerken ist an dieser Stelle, dass sich die vorstehend erläuterte Erfindung auf wenigstens eine (oder mehrere) Heißkanaldüse(n) bezieht, die an wenigstens einem Hauptverteilerarm oder mehreren Verteilerarmen und wenigstens einem damit verbundenen Nebenverteilerarm oder mehreren Verteilerarmen schwenkbar ist bzw. sind und bei der/denen mit einfachsten Mitteln eine vorteilhafte Abdichtung des Heißkanalsystems mit den relativ zueinander vor einem Spritzvorgang verstellbaren und beim Erwärmen noch zum Ausgleich wärmebedingter Ausdehnung begrenzt relativ zueinander beweglichen Systemkomponenten erfolgt.

Es wird aber auch noch eine Weiterbildung realisiert, welche in den Ansprüchen 18 sowie den sich hierauf beziehenden Unteransprüchen ihren Niederschlag gefunden hat. Dabei sind diese Ansprüche als eine Weiterbildung der in den Ansprüchen 1 bis 17 beanspruchten Erfindung geeignet.

Nach dem Merkmal f) des Anspruchs 17 sind die wenigstens zwei Düsenanordnungen mit den Heißkanaldüsen auf einem durch die Schwenkbarkeit der Verteilerarme sich ergebenden bzw. durch die Schwenkbarkeit überstreichbaren und damit "definierten" Flächenbereich unabhängig voneinander positionierbar. Diese Erfindung ermöglicht also mit dem einfachen Mittel der Schwenkbarkeit eine weitgehend unabhängige Positionierbarkeit von wenigstens zwei oder mehr Düsenanordnungen bzw. von deren Heißkanaldüsen in einer Ebene.

Aufgrund der Verschwenkbarkeit ist der durch die Verteilerarme definierte bzw. beschreibbare Flächenbereich der möglichen Positionen der Düsenanordnungen kreisringförmig oder teilkreisringförmig, so dass sich mit nur geringem konstruktiven Aufwand eine besonders großflächige Verstellbarkeit ergibt, wobei ferner der besondere Vorteil besteht, dass die Länge des Schmelzkanals einer zugeordneten Heißkanaldüse unabhängig von der Entfernung zwischen der Heißkanaldüse und der Angussöffnung in jeder Position auf dem Flächenbereich gleich ist. Vorzugsweise ist sogar vorgesehen, dass sämtliche Haupt- und Nebenverteilerarme gleich lang sind. Dies ist aber nicht zwingend der Fall.

Es ist ferner vorteilhaft, wenn der Winkel im Betriebszustand zwischen dem Hauptverteilerarm und den Nebenverteilerarmen immer größer oder kleiner als 180 ° ist.

Aufgrund der vorteilhaften Dichtkonstruktion ist es möglich, dass sich der Winkel zwischen Hauptverteilerarm und Nebenverteilerarm durch thermische Ausdehnung insbesondere während der Aufheizphase ändert.

Dabei werden die Querkräfte, die durch die Längenänderung bei thermischer Ausdehnung des Heißkanalsystems entstehen, die auf die Heißkanaldüse wirken, durch die Winkeländerung zwischen Hauptverteilerarm und Nebenverteilerarm wiederum teilweise oder vollständig kompensiert. Erreichbar ist dies insbesondere wieder durch Anspruch 15.

Als besonders vorteilhaft ist es ferner zu erwähnen, dass die Heißkanal-Verteileranordnung für Werkzeuge mit verschiedenen Heißkanaldüsenabständen einsetzbar ist.

Vorteilhafte Ausgestaltungen der Erfindung sind den Unteransprüchen zu entnehmen.
- Fig. 1: eine perspektivische Ansicht einer ersten erfindungsgemäßen Heißkanal-Verteileranordnung;

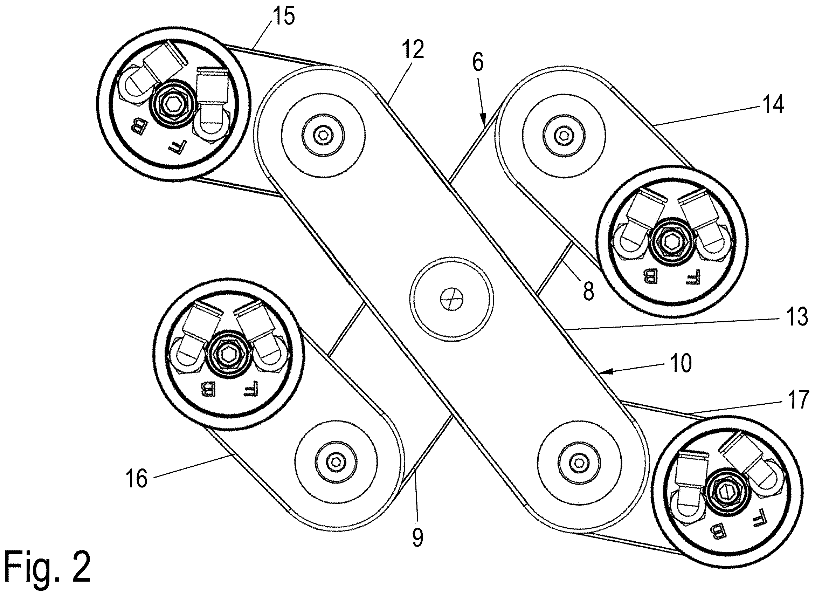

- Fig.2: eine Draufsicht auf die Anordnung der Fig.1;

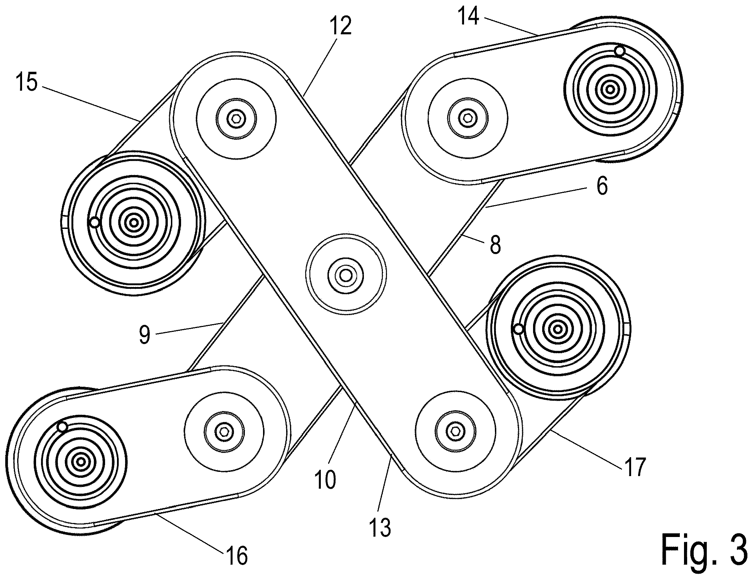

- Fig. 3: eine Ansicht der Unterseite der Anordnung der Fig. 1;
- Fig. 4: eine perspektivische Ansicht einer weiteren erfindungsgemäßen Heißkanal-Verteileranordnung;
- Fig.5: eine Draufsicht auf die Anordnung der Fig.4 in einer ersten Betriebsstellung;
- Fig.6: eine Draufsicht auf die Anordnung der Fig.4 in einer zweiten Betriebsstellung;
- Fig.7: eine Draufsicht auf eine dritte Heißkanal-Verteileranordnung in einer ersten Betriebsstellung;
- Fig.8: eine Draufsicht auf die Anordnung der Fig.4 in einer zweiten Betriebsstellung;
- Fig. 9: einen Schnitt durch einen Teil der Anordnung der Fig. 4;
- Fig. 10a,b - Fig. 12 a, b: eine Draufsicht und einen Schnitt eines Teilbereiches verschiedener Varianten von Heißkanal-Verteileranordnungen;
- Fig. 13: einen Schnitt durch einen Teil einer in ein Heißkanalsystem bzw. ein Werkzeug einer Spritzgußmaschine eingesetzten Heißkanal-Verteileranordnung;
- Fig. 14: eine schematische Ansicht der Winkelstellung zwischen Hauptverteilerblock und Nebenverteilerarm im kühlen Zustand;
- Fig. 15: eine schematische Ansicht der Winkelstellung zwischen Hauptverteilerblock und Nebenverteilerarm im warmen Zustand;
- Fig. 16: eine schematische Ansicht einer komplexen Heißkanal-Verteileranordnung;
- Fig. 17: eine Variante der Heißkanal-Verteileranordnung aus Fig. 12, wobei der Nebenverteilerarm unterhalb des Hauptverteilerblocks verschwenkt ist;

Soweit nachfolgend Begriffe wie "oben", "unten", "waagerecht" usw. verwendet werden, beziehen sie sich auf die jeweilige Darstellung in den Figuren und sind nicht einschränkend zu verstehen bzw. jeweils in andere Lagen der Anordnungen entsprechend zu übertragen. Fachbegriffe sind zudem - wenn nicht im Kontext dieser Anmeldung anders definiert - in ihrem fachüblichen Sinn zu verstehen.

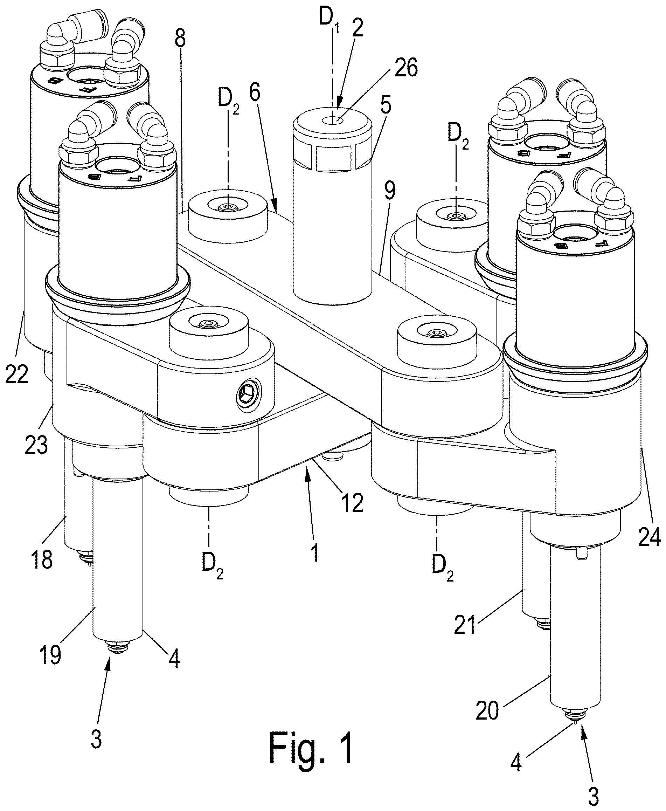

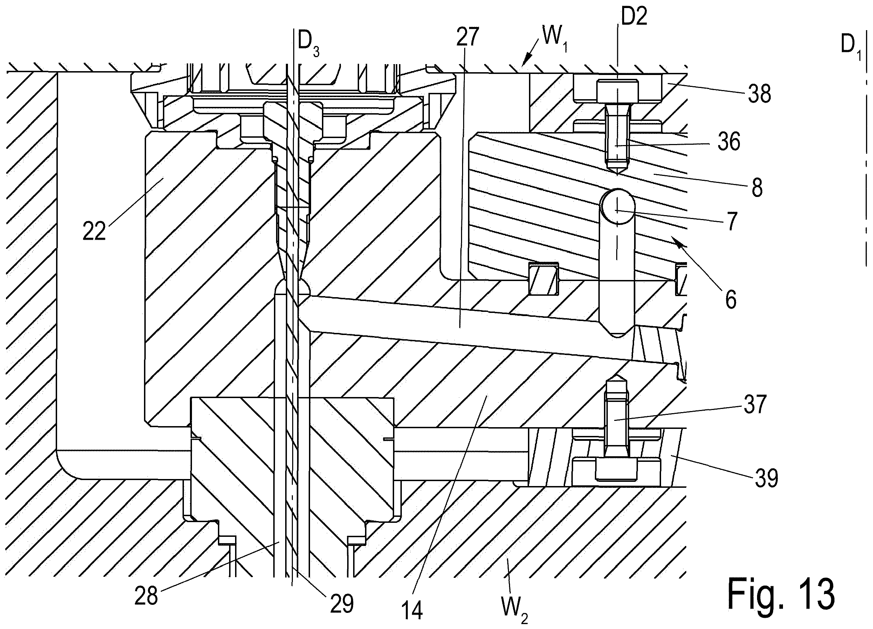

Fig. 1 offenbart eine Heißkanal-Verteileranordnung 1, die bei bzw. in einem Heißkanalsystem einsetzbar ist. Ein Beispiel eines bekannten Heißkanalsystems - bei dem die Erfindung theoretisch als Verbesserung bzw. Weiterentwicklung einsetzbar wäre - zeigt die Fig. 1 der DE 29 38 832. Es sei zudem auf Fig. 13 verwiesen, welche die Heißkanal-Verteilerkanalanordnung 1 in einem in ein Heißkanal-System bzw. in einem in ein umgebendes Heißkanal-Verteilerkanalsystem eingesetzten Zustand zeigt.

Die Heißkanal-Verteileranordnung 1 dient zur Zuleitung einer Kunststoffschmelze, die in eine Angussöffnung 2 der Heißkanal-Verteileröffnung eintritt, zu wenigstens einer oder hier mehreren Auslassöffnungen 3, an der bzw. denen die Kunststoffschmelze jeweils in ein Formnest einer hier nicht dargestellten Spritzgußform geleitet wird. An der oder den Auslassöffnungen kann bzw. können jeweils eine Düsenanordnung 18 bis 21 mit einer Spitze und/oder einer Verschlussnadel angeordnet sein.

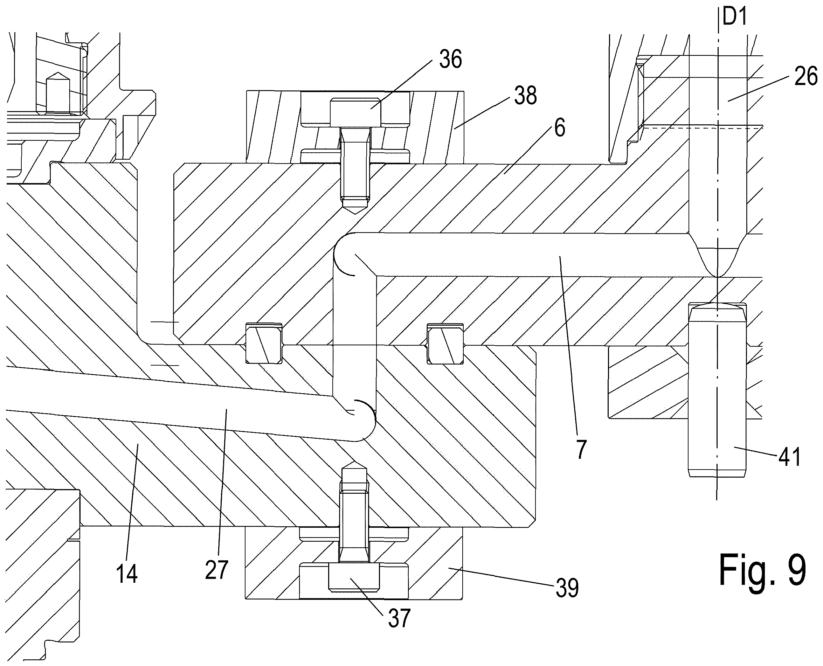

Die Heißkanal-Verteileranordnung 1 weist einen ersten Verteilerabschnitt 5 auf, der hier als zylindrischer Körper ausgebildet ist, der an seinem einen, in Fig. 1 oberen, Ende die Angussöffnung 2 aufweist und der konzentrisch von einem Verteilerkanal 26 durchsetzt ist (siehe Fig. 9). Vorzugsweise ist der Verteilerabschnitt 5 vertikal ausgerichtet.

An den Verteilerabschnitt 5 ist ein erster Hauptverteilerblock 6 angesetzt, der einen Verteilerkanal 7 aufweist, wobei sich der erste Hauptverteilerblock 6 und der Verteilerkanal 7 "waagerecht" bzw. rechtwinklig/senkrecht zu dem Verteilerabschnitt 5 erstrecken und wobei der erste Hauptverteilerblock 6 zwei Hauptverteilerarme 8, 9 (Anm: "9" in Figur 1 korrigieren) aufweist, an denen der Verteilerabschnitt 5 in einem Bereich zwischen den Enden der Hauptverteilerarme 8, 9, - hier etwa mittig zwischen den Enden der Hauptverteilerarme - ansetzt.

Die Erstreckungen des Verteilerkanals 7 müssen nicht wie in den Ausführungsbeispielen waagerecht bzw. rechtwinklig/senkrecht verlaufen. Die Erststreckungen des Verteilerkanals 7 sind in der Regel eher weg-, druck- oder temperaturoptimiert in den Verteilerblöcken angelegt, um einen möglichst gleichmäßigen Schmelzefluss zu realisieren.

Unterhalb des ersten Hauptverteilerblocks 6 ist ferner ein zweiter Hauptverteilerblock 10 (Anm: "10" in Fig.1 hinzu) angeordnet, der wiederum - analog zum ersten Hauptverteilerblock - einen Verteilerkanal (hier nicht sichtbar) aufweist, wobei sich der zweite Hauptverteilerblock 10 und sein Verteilerkanal im Wesentlichen rechtwinklig zu dem Verteilerabschnitt 5 erstrecken und wobei der Hauptverteilerblock 10 wiederum zwei Hauptverteilerarme 12, 13 aufweist. Die Verteilerkanäle des ersten Hauptverteilerblocks 6 und des zweiten Hauptverteilerblocks 10 kommunizieren bzw. sind miteinander verbunden.

In den hier gewählten, beispielhaften Betriebsstellungen sind die Hauptverteilerblöcke 6 und 10 etwa kreuzförmig zueinander ausgerichtet.

Vorzugsweise ist der wenigstens eine oder sind die Hauptverteilerblöcke 6 und 10 - um eine Grundeinstellung vor dem eigentlichen Heißkanalspritzen vornehmen zu können - um die Längsachse D1 (die erste Drehachse) des Verteilerabschnitts 5 drehbar.

Es ist ferner vorteilhaft, wenn die Hauptverteilerblöcke 6, 10 auch relativ zueinander um diese Drehachse D1 (Fig. 1) verdrehbar sind.

Es ist auch denkbar, dass der Verteilerabschnitt 5 selbst um seine Längsachse drehbar an einem übergeordneten (hier nicht dargestellten) Maschinengestell angeordnet ist.

Derart können mit den Enden von jedem der Hauptverteilerarme 8, 9 bzw. wenn vorhanden 12, 13 beliebige auf einem Kreis liegende Punkte bzw. Orte angefahren werden.

Dabei sind die Auslassöffnungen 3 für die in Formnester durchgeleitete Schmelze nicht direkt an den Enden der Hauptverteilerarme 8, 9 und 12, 13 ausgebildet. Um vielmehr ausgehend von den eingestellten Positionen auch verschiedene Radien für die Auslassöffnungen 3 einstellen zu können, sind an die Enden der Hauptverteilerarme Nebenverteilerblöcke, die Nebenverteilerarme 14 bis 17 ausbilden, angeordnet, die auf Kreisen um eine Schwenkachse D2 im Endbereich der Hauptverteilerarme 8, 9; 12, 13 verschwenkbar sind.

Damit sind die Enden der Hauptverteilerarme wie Planeten um ein Zentrum - die Längsachse des Verteilerabschnitts 5 - verschwenkbar, sowie die Nebenverteilerarme 14 bis 17 ähnlich zu Trabanten um Planeten um die Enden der Hauptverteilerarme 8, 9; 12, 13 verschwenkbar.

An den Enden der Nebenverteilerarme 14 bis 17 sind dann die eigentlichen Düsenanordnungen 18 bis 21 mit den Auslassöffnungen 3 in die entsprechenden Formnester ausgebildet.

Die eingestellten Schwenkpositionen der Nebenverteilerarme 14 bis 17 an den Hauptverteilerarmen 8, 9; 12, 13 sind wiederum mittels geeigneter Fixiermittel wie beispielsweise Bolzen und/oder mit einem Klemmmechanismus eines übergeordneten Werkzeugs mit Platten W1, W2 oder sonstigen Elementen (hier nicht dargestellt) fixierbar.

Durch geeignete Einstellung bzw. Abstimmung der Position der Haupt- und Nebenverteilerarme 8, 9; 12, 13 bzw. 14-17 (die Drehachsen D1 der Hauptverteilerarme und die Drehachsen D2 der Nebenverteilerarme zu den Hauptverteilerarmen sind hierzu jeweils parallel zueinander ausgerichtet.) können einfach verschiedenste Positionen nicht nur auf einem Kreis sondern auf einer Kreisringfläche KF um die zentrale Drehachse D1 eingestellt werden, wobei die Größe und die Lage dieser Kreisringfläche durch die entsprechende Länge der Arme und ggf. daran angeordneter Elemente bestimmt ist bzw. bestimmbar ist.

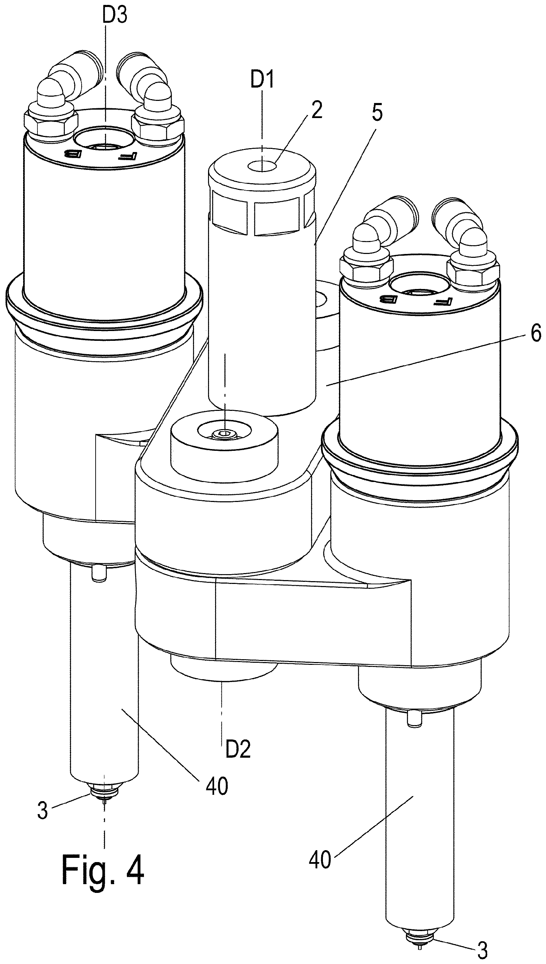

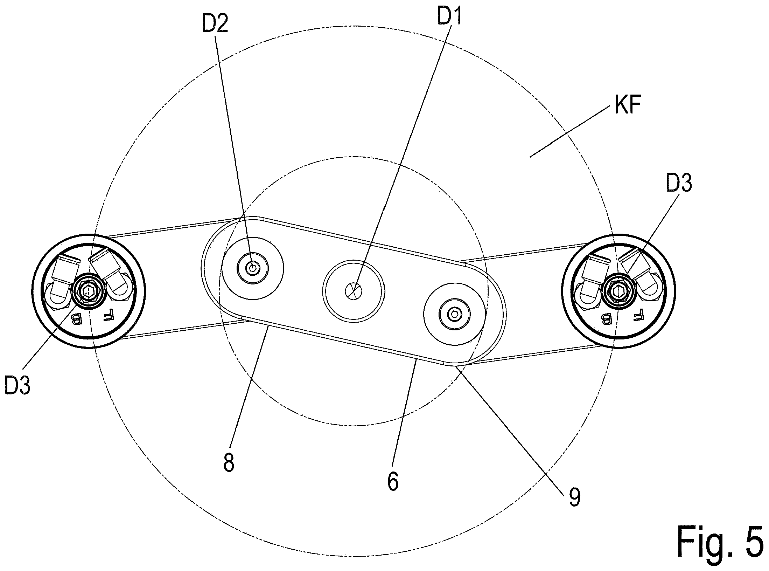

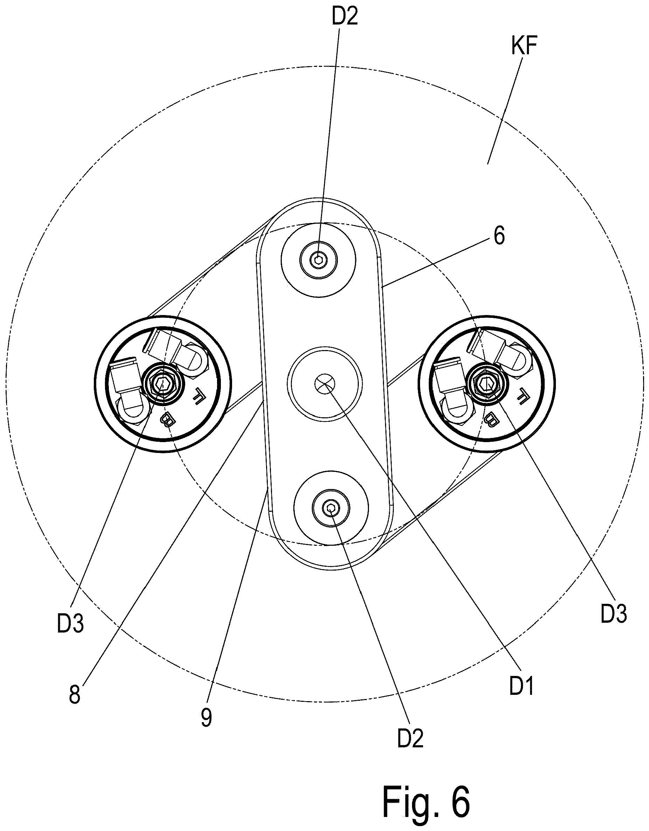

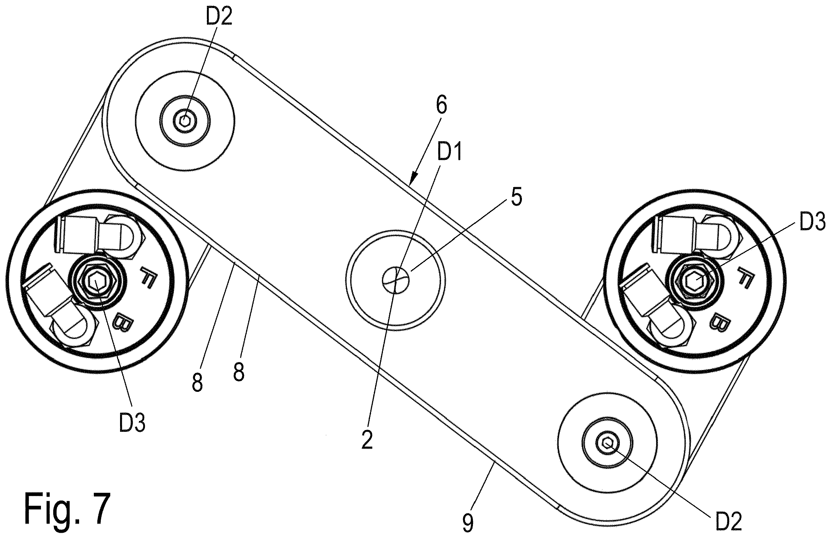

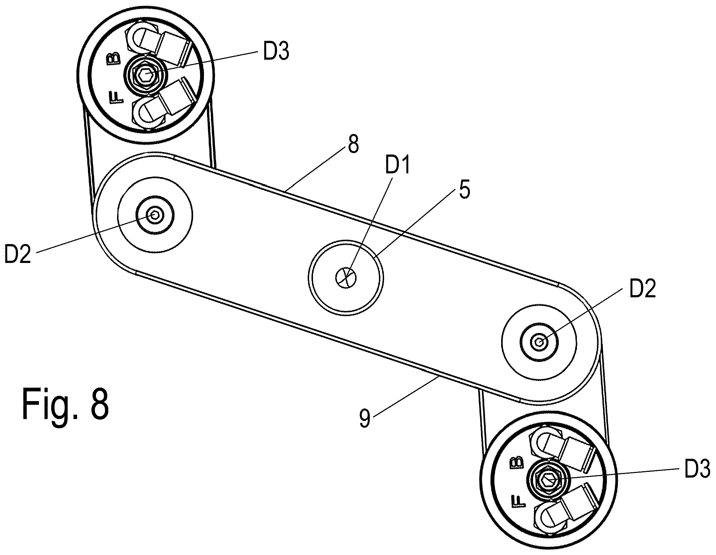

Dies geht beispielsweise aus einem Vergleich der Fig. 4 bis 8 hervor, nach denen jeweils nur ein Hauptverteilerblock vorgesehen ist, aber wobei einmal dargestellt ist, wie sich verschiedene Positionen einstellen lassen (Fig. 5 und 6) und einmal, wie sich durch eine Wahl verschieden langer Hauptverteilerarme 6 zunächst unterschiedliche Bereiche bzw. Kreisringflächen KF einstellen lassen (vergleiche Fig. 5 und 6 bzw. 7 und 8).

Besonders vorteilhaft ist, dass es die erfindungsgemäße Heißkanal-Verteileranordnung erlaubt, die Position der Auslassöffnungen 3 innerhalb eines konstruktiv vorgegebenen Ringflächenbereichs um das Zentrum zu verstellen, so dass die Positionen der Auslassöffnungen 3 entsprechend zu verschiedensten Formnestpositionen einstellbar sind.

Erfindungsgemäß ist die eingestellte Lage der Hauptverteiler- und der Nebenverteilerarme fixierbar, insbesondere mit Hilfe eines übergeordneten Klemmmechanismus (siehe Fig. 13). Insbesondere wirkt der Klemmmechanismus im Bereich der ersten und jeweils zweiten Drehachsen D1, D2.

Der Klemmmechanismus kann durch Elemente wie Platten W1, W2, siehe Fig. 13, eines übergeordneten Werkzeugs bzw. Heißkanalsystems gebildet werden.

Dabei ist die Abstimmung vorzugsweise derart, dass infolge thermischer Ausdehnung der Elemente der Heißkanal-Verteileranordnung diese beim Erreichen der Betriebstemperatur zwischen benachbarten Werkzeugelementen (in Fig,.1 "oben" und "unten") genügend fest eingespannt bzw. festgeklemmt werden, so dass eine hohe Dichtigkeit in den Übergangsbereichen zwischen den Haupt- und Nebenverteilerarmen 8, 9; 12, 13 und 14 bis 17 sowie vorzugsweise auch zwischen den beiden Hauptverteilerarmen 8, 9; 12, 13 und dem Verteilerabschnitt 5 erzielt wird. Diese Elemente berühren im erhitzten Zustand des Systems entsprechende Elemente (analog zu den Elementen W1 und W2) des umgebenden Systems.

Befindet sich das Heißkanal-Verteilersystem dagegen nicht auf Betriebstemperatur bzw. im kalten Zustand, sind die Verteilerarme 8, 9; 12, 13 und 14 bis 17 frei beweglich, so dass ihre Position entsprechend zu der jeweiligen Spritzgussaufgabe einstellbar ist. Separate Befestigungsmittel können dann sogar entfallen. Eine entsprechende Anordnung zeigt die bereits erwähnte Fig. 13. Auch beim Erwärmen ist eine gewisse Relativverschwenkbarkeit zwischen den Haupt- und den jeweils zugeordneten bzw. daran verschwenkbaren Nebenverteilerarmen 8, 9; 12, 13 und 14 bis 17 weiter gegeben, so dass durch eine Winkeländerung zwischen diesen Elementen wärmebedingte Längenveränderungen der Systemkomponenten ausgleichbar sind.

Im einfachsten Fall sind wenigstens ein Hauptverteilerblock 6 und ein Nebenverteilerarm 10 mit wenigstens einem oder vorzugsweise je zwei Hauptverteilerarmen und jeweils einem Nebenverteilerarm vorgesehen.

Eine entsprechende Anordnung zeigt die Fig. 4.

Vorteilhaft sind aber mehrere Hauptverteilerblöcke 6 und 10 (wie zu Fig. 1 beschrieben), die jeweils wieder mehr als einen der Hauptverteilerarme 8, 9 bzw. 12, 13 aufweisen.

Dabei kann wiederum vorzugsweise an jedem Ende jedes Hauptverteilerarms 8, 9, 12, 13 jeweils einer der Nebenverteilerarme 14, 15, 16, 17 verschwenkbar angeordnet sein.

Im vorliegenden Fall wird eine besonders vorteilhafte kompakte Anordnung dadurch erreicht, dass die Nebenverteilerarme 15 und 17 der in Z-Richtung "unteren" Hauptverteilerarme 12 und 13 jeweils "oberhalb" dieser Hauptverteilerarme angeordnet sind, wohingegen die Nebenverteilerarme 14 und 16 der in Fig. 1 entsprechend in Z-Richtung "oberen" Hauptverteilerarme 8 und 9 jeweils "unterhalb" dieser Hauptverteilerarme angeordnet sind, an welchen bzw. relativ zu welchen sie verschwenkbar sind.

Die Nebenverteilerarme 14 bis 17 weisen hier jeweils Hülsenabschnitte 22 - 25 auf, die in Z-Richtung jeweils gleich lang sind und derart angeordnet sind, dass in sie eingesetzte Düsenanordnungen 18, 19, 20, 21 jeweils in Z-Richtung auf gleicher Höhe liegen.

In manchen Einsatzfällen, kann es auch erforderlich sein, dass die Hülsenabschnitte 22 - 25 bzw. die Auslassöffnungen 3 in Z-Richtung nicht auf gleicher Höhe liegen. Dies ist meist bei Spritzgusserzeugnissen mit mehreren Anspritzpunkten der Fall.

Die Nebenverteilerarme 14 bis 17 weisen jeweils einen Nebenverteilerkanal auf, von denen einer - der Nebenverteilerkanal 27 - in Fig. 9 und 13 sichtbar ist. Fig. 13 zeigt auch, dass der jeweilige Nebenverteilerkanal 27 horizontaler Ausrichtung in einen vertikalen Verteilerkanal 28 übergeht, in welchem beispielsweise die Verschlussnadel 29 beweglich geführt ist.

Die Verteilerkanäle erstrecken sich derart fluchtend durchgehend von der Angußöffnung durch die Haupt- und Nebenverteilerarme 8, 9 bzw. 12, 13 bzw. 14 bis 17 bis in die Düsenanordnung zu den Auslassöffnungen 3 mit Düsenspitzen und/oder Verschlussnadeln 29.

Die Düsenkörperanordnungen können jeweils Heizungen aufweisen und ggf. einen Elektro- und/oder Fluidanschluss, um einen Verschlussmechanismus betätigen zu können.

Vorteilhaft ist, dass die jeweils eingestellte Position der Haupt- und Nebenverteilerarme 8, 9 bzw. 12, 13 bzw. 14 bis 17 lediglich im erhitzten Zustand weitestgehend fixiert ist. Hierzu sind an geeigneten Stellen entsprechende Dichtmaßnahmen getroffen.

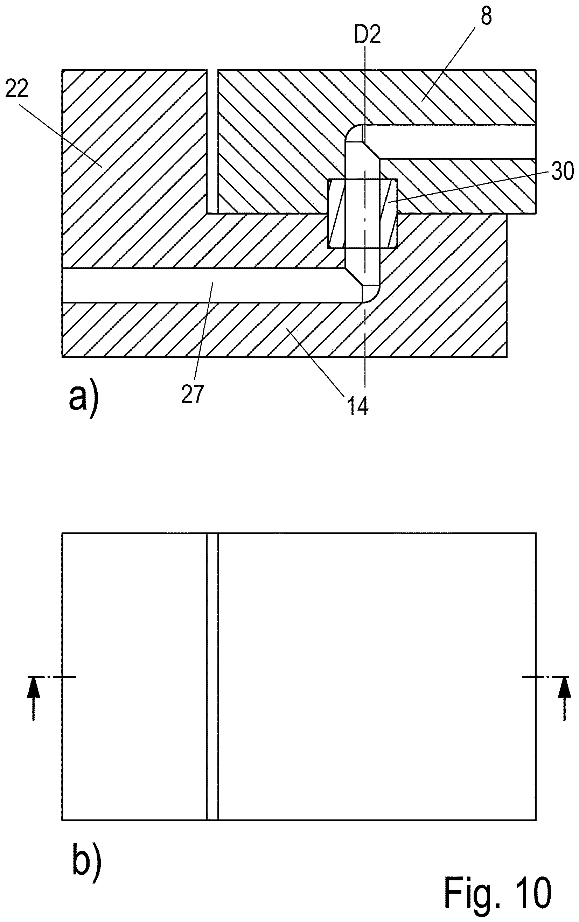

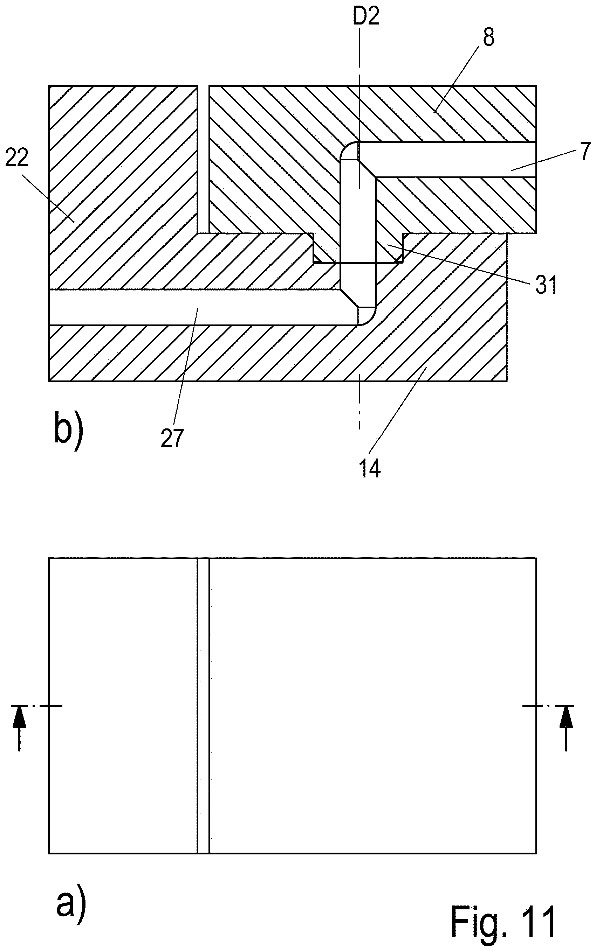

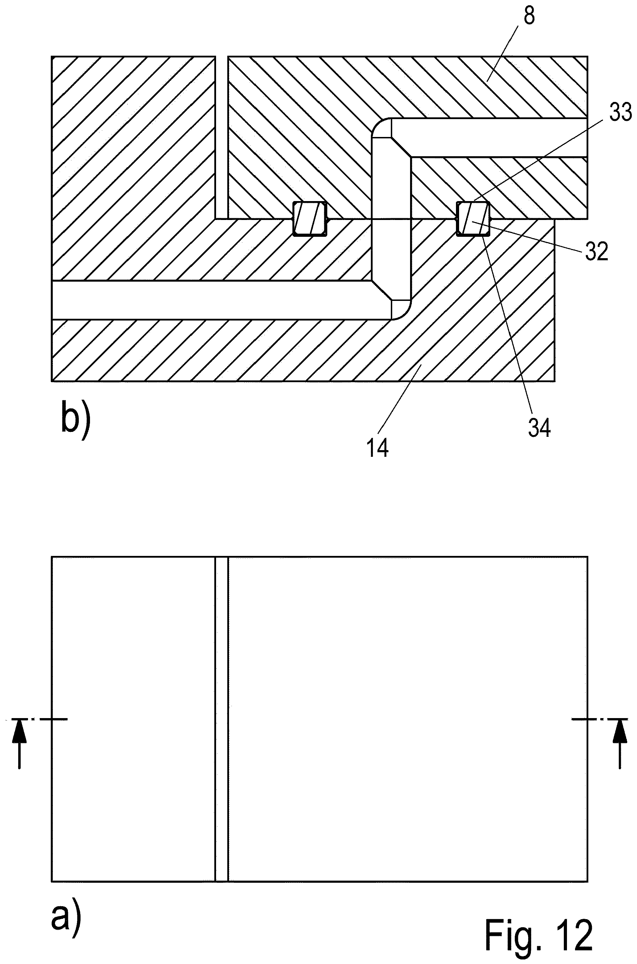

Die Dehnbarkeit, die Dichtung und die Zentrierung im Übergang vom "Hauptverteiler" zum "Nebenverteiler" werden vorzugsweise jeweils durch eines der folgenden Prinzipien gewährleistet. Danach können zwischen den Übergangsbereichen der Verteilerkanäle zwischen den Haupt und Nebenverteilerarmen Buchsen als Schmelzeleithülsen 30 vorgesehen sein, welche den Übergangsbereich abdichten sowie eine Drehbarkeit und Zentrierung gewährleisten oder aber es können hierzu jeweils eine oder mehrere hülsenartige Vorsprünge 31 des einen Armes in entsprechende Ausnehmungen der anderen Arme eingreifen oder es können Dichtringe 32 in Ringnuten 33, 34 der Anlageflächen ausgebildet sein (Fig. 10, 11, 12, 17). Wesentlich ist, dass die Dichtigkeit nach einem Einstellen allein durch thermische Ausdehnung und das damit einhergehende Festklemmen zwischen "oben" und "unten" jeweils angrenzenden Werkzeug-Elementen, z.B. Werkzeugplatten W1, W2 erfolgt (siehe auch Fig. 13).

Die Dichtung erfolgt vorzugweise stirnseitig durch Flächenpressung und die Zentrierung umlaufend.

Dabei kann es wieder vorteilhaft sein, wenn an die Verteilerarme 8, 9, 12, 13 bzw. 14 bis 17 im Anlagebereich zu den Werkzeugen, beispielsweise beidseits bzw. oberhalb und unterhalb der Gelenkbereiche zwischen den Hauptverteilerarmen und zwischen den Haupt- und den Nebenverteilerarmen, beispielsweise mittels Schrauben 36, 37, Ringe 38, 39 z.B. aus Stahl, angesetzt sind, welche als Druckstücke ebene Anlageflächen ausbilden und welche besonders definiert an den Werkzeugelementen W1, W2 anliegen (siehe hierzu insbesondere die Fig. 9 und 13). Aufgrund der vorteilhaften Dichtkonstruktion kann sich der Winkel zwischen dem wenigstens einen Hauptverteilerarm 8, 9 und seinem wenigstens einen Nebenverteilerarm 14-17 durch thermische Ausdehnung insbesondere während der Aufheizphase sogar ändern. Dabei werden die Querkräfte, die durch die Längenänderung bei thermischer Ausdehnung des Heißkanalsystems entstehen, die auf den Düsenkörper (40) wirken, durch die Winkeländerung zwischen dem Hauptverteilerarm 8, 9 und seinem wenigstens einen (oder seinen mehreren) Nebenverteilerarm(en) 14 -17 teilweise oder vollständig kompensiert.

Der Hauptverteilerblock 6 (und auch 10) weist eine Drehachse D1 auf und ist hinsichtlich der "horizontalen" thermischen Ausdehnung in der Position der Drehachse D1 fixiert. Hierzu trägt vorteilhaft ein (Gelenk-)stift 41 bei, der zentrisch zur Drehachse liegt (Fig. 9) und mit einem seiner Enden in den Hauptverteilerblock 6 an der vom Schmelzeeintritt abgewandten Seite eingreift und an seinem anderen Ende entsprechend fixiert (jedenfalls nach einem Einstellen und einem Zusammenbau des Systems) in eine Ausnehmung im hier nicht dargestellten Werkzeug (siehe aber Fig. 13 in Hinsicht auf das Werkzeug) wird. Die Nebenverteilerarme 14 bis 17 weisen dagegen je eine verstellbare Drehachse D2 am Hauptverteilerarm auf. Der bzw. vorzugsweise jeder Nebenverteilerarm 14 - 17 wird derart quasi über den an seinem freien Ende angeordneten Düsenkörper 40 drehbar durch die Drehachse D3 im Werkzeug fixiert.

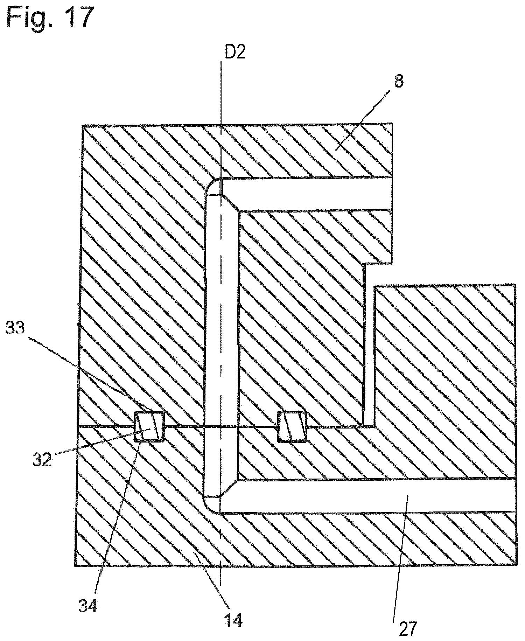

Der Schwenkbereich eines Nebenverteilerarms um die Drehachse D2 am Hauptverteilerarm beträgt in diesem Ausführungsbeispiel ca. 270°. In besonderer Ausgestaltung kann der Schenkbereich eines Nebenverteilerarms stark variieren. Aufgrund von z.B. Längenverhältnissen der Verteilerarme, kann der Schwenkbereich auch wesentlich kleiner sein als 270°. Es ist aber auch möglich durch konstruktive Maßnahmen z.B. durch ein hoch gebautes Gelenk, wie in Fig 17 dargestellt, ein Schwenkbereich von bis zu 360° zu erzielen.

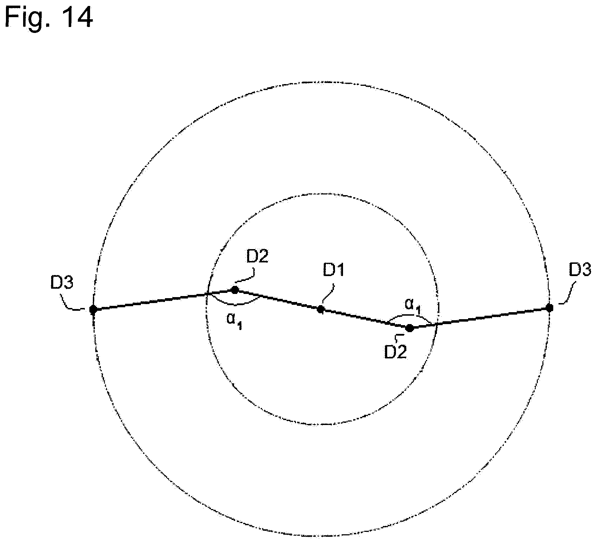

Fig. 14 zeigt eine mögliche schematische Darstellung einer Heißkanal-Verteileranordnung im kühlen Zustand, wobei der Hauptverteilerblock und die Nebenverteilerarme symbolisch durch Linien dargestellt sind, die die Drehachsen (D1, D2, D3) miteinander verbinden. Der Hauptverteilerblock ist hier durch die Verbindungslinie der Drehachsen D2, D1 und D2 dargestellt. Die Nebenverteilerarme sind hier durch die Verbindungslinien der Drehachsen D2, D3 dargestellt. Die Verbindungslinien bilden wie in der Fig. 14 dargestellt einen Winkel α1. Die Drehachsen D1 und D3 sind im Wesentlichen räumlich fixiert, so dass sie im Wesentlichen nur eine Drehung der Verteilerblöcke um ihre Drehachse zulassen. Die Drehachsen D2 sind im Wesentlichen räumlich nicht fixiert, so dass nicht nur eine Drehung des Hauptverteilerblocks bzw. - Nebenverteilerarme um die Drehachse D2 möglich ist, sondern auch eine räumliche Verschiebung der Drehachse D2 durch die thermische Ausdehnung des Hauptverteilerblocks und der Nebenverteilerarme. Alle drei Drehachsen D1, D2 und D3 sind hier im Wesentlichen parallel zueinander angeordnet, wodurch die notwendige Beweglichkeit des Hauptverteilerblocks und der Nebenverteilerarme bei Erwärmung gewährleistet ist.

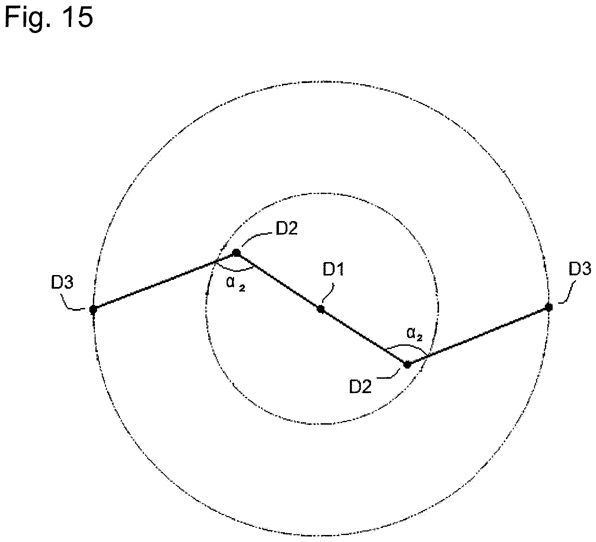

Fig. 15 zeigt eine mögliche schematische Darstellung einer Heißkanal-Verteileranordnung der Fig. 14 im warmen Betriebeszustand. Wie hier deutlich zu erkennen ist, ist die Drehachse D2 durch die thermische Ausdehnung des Hauptverteilerblocks und der Nebenverteilerarme räumlich verschoben. Neben der räumlichen Verschiebung der Drehachse D2 ist der Winkel α2 im warmen Betriebszustand kleiner als der Winkel α1 im kühlen Zustand des Heißkanalsystems.

Durch die Winkeländerung (α1 zu α2) und der räumlichen Verschiebung der Drehachse D2 werden die Spannungen durch thermische Ausdehnung zwischen Hauptverteilerblock, Nebenverteilerblock und Heißkanaldüse, die üblicher Weise in Heißkanal-Verteileranordnungen, die dem Stand der Technik entsprechen, auftreten, minimiert.

Wie bereits beschrieben kann die Abdichtung der Gelenke zwischen Hauptverteilerblock und Nebenverteilerarm ab einer bestimmten Temperatur, die in der Regel niedriger ist als die Betriebstemperatur, durch Klemmung erfolgen. Denkbar ist aber auch eine andere Ausführung des Gelenks, die keine Klemmkraft zur Abdichtung der Gelenkverbindung zwischen Hauptverteilerblock und Nebenverteilerarm benötigt, auch wenn diese Ausführung hier nicht näher beschrieben ist.

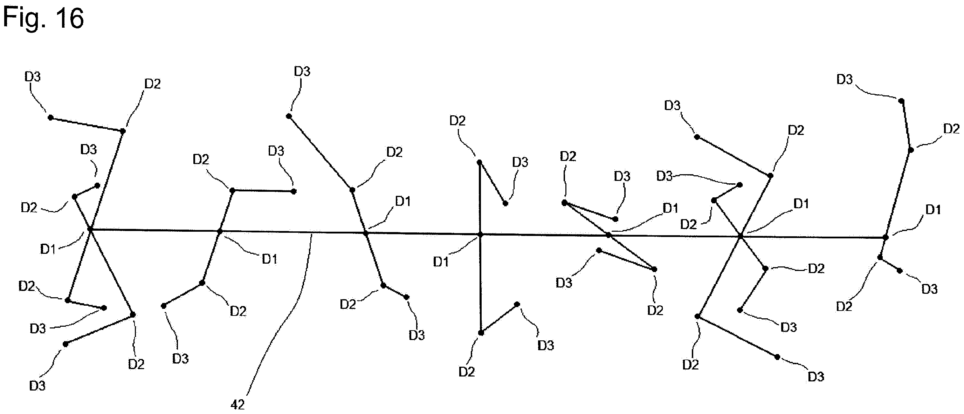

Fig. 16 zeigt eine mögliche schematische Ansicht einer komplexen Heißkanal-Verteileranordnung mit verschiedenen Hauptverteilerblöcken und Nebenverteilerarmen, die wie in Fig. 14 und Fig. 15 durch Verbindungslinien der Drehachsen D1, D2, D3 vereinfacht dargestellt sind.

Die Hauptverteilerblöcke sind hier an einem Versorgungsblock 42 angeschlossen. Des Weiteren sind hier verschiedenste Möglichkeiten von Winkelstellungen, Haupt- und Nebenverteilerarmlängen dargestellt. In der schematischen Darstellung ist gut erkennbar, dass sowohl stumpfe, rechte als auch spitze Winkel in verschiedenster Art und Weise miteinander kombinierbar sind.

Es zeigt sich insgesamt, dass die Heißkanal-Verteileranordnung höchst flexibel einsetzbar ist, da nicht nur die Düsenabstände variiert werden können, sondern auch, dass das Heißkanal-Verteilersystem auch nahezu beliebig veränderbar ist.

**Bezugszeichen**

| | |
|---|---|
| Hei ßkanal-Verteileranordnung | 1 |
| Angussöffnung | 2 |
| Auslassöffnungen | 3 |
| Verteilerabschnitt | 5 |
| Hauptverteilerblock | 6 |
| Verteilerkanal | 7 |
| Hauptverteilerarme | 8,9 |
| zweiter Hauptverteilerblock | 10 |
| Hauptverteilerarme | 12, 13 |
| Nebenverteilerarme | 14 bis 17 |
| Düsenanordnungen | 18 - 21 |
| Hülsenabschnitte | 22 - 25 |
| Verteilerkanal | 26 |
| Nebenverteilerkanal | 27 |
| Verteilerkanal | 28 |
| Verschlussnadel | 29 |
| Schmelzeleithülse | 30 |
| Vorsprünge | 31 |
| Dichtringe | 32 |
| Ringnuten | 33, 34 |
| Schrauben | 36, 37 |
| Ringe | 38, 39 |
| Düsenkörper | 40 |
| Stift | 41 |
| Versorgungsblock | 42 |
| Dreh-/Längsachsen | D1, D2, D3 |
| Kreisringfläche | KF |
| Werkzeugplatten | W1, W2 |
| Winkel | α₁, α₂ |

## Patentansprüche

1. Heißkanal-Verteileranordnung (1) für ein Heißkanalsystem, das während einer Aufheizphase aufheizbar ist, mit einem daran angrenzenden Werkzeug,
a) die zur Zuleitung einer Kunststoffschmelze von einer Angußöffnung (2) zu wenigstens zwei relativ zueinander und unabhängig voneinander beweglichen Düsenanordnungen (18 - 21) ausgebildet ist, die jeweils wenigstens eine Austrittsöffnung (3) im Bereich eines Düsenkörpers (40) aufweisen,
b) wobei wenigstens ein um eine erste Drehachse (D1) verschwenkbarer Hauptverteilerblock (6, 10) mit wenigstens einem Hauptverteilerarm (8, 9 ; 12, 13) vorgesehen ist,
c) wobei an dem wenigstens einen Hauptverteilerblock (6, 10) wenigstens ein um eine zweite Drehachse schwenkbarer Nebenverteilerblock, der wenigstens einen Nebenverteilerarm (14- 17) ausbildet, angeordnet ist,
d) wobei zwischen dem Hauptverteilerblock (6, 10) und dem Nebenverteilerblock ein Winkel (α) einstellbar ist,
e) wobei an jedem Nebenverteilerarm (14, 17) wenigstens eine der Düsenanordnungen (18- 21) vorgesehen ist, und
**dadurch gekennzeichnet, dass**
f) nach einem Einstellvorgang der Positionen der Haupt- und Nebenverteilerblöcke im kalten Zustand des Heißkanalsystems bereits vor einem Erwärmen auf die zum Spritzen erforderliche Betriebstemperatur jeweils die erste Drehachse (D1) des Hauptverteilerblockes (8, 9) und die Orte des Schmelzeaustritts, also die Düsenkörper (40), nicht aber die zweiten Drehachsen (D2) der Nebenverteilerarme an dem Hauptverteilerblock (8, 9), relativ zu dem Werkzeug bzw. in dem umgebenden Werkzeug ortsfest fixiert sind, wobei sich der Winkel (α1, α2) zwischen Hauptverteilerarm (8, 9 ; 12, 13) und Nebenverteilerarm (14, 16 ; 15, 17) durch thermische Ausdehnung wenigstens während einer Aufheizphase ändert, und
g) dass die Relativposition zwischen dem jeweils wenigstens einen Haupt- und Nebenverteilerarm oder den Haupt- und Nebenverteilerarmen lediglich im beheizten Betriebszustand des Heißkanalsystems durch Wärmeausdehnung direkt im Bereich der zweiten Drehachsen (D2) klemmend fixiert ist.

2. Heißkanal-Verteileranordnung nach Anspruch 1, **dadurch gekennzeichnet, dass** zwei oder mehr Hauptverteilerblöcke (6, 10) vorgesehen sind und dass diese unabhängig voneinander und relativ zueinander schwenkbar sind.

3. Heißkanal-Verteileranordnung nach Anspruch 2, **dadurch gekennzeichnet, dass** jeder Hauptverteilerblock (6, 10) zwei sich quer zur ersten Drehachse zu entgegengesetzten Richtungen erstreckende Hauptverteilerarme (8, 9; 12, 13) aufweist.

4. Heißkanal-Verteileranordnung nach Anspruch 3, **dadurch gekennzeichnet, dass** an jedem der Hauptverteilerarme (8, 9; 12, 13) jeweils wenigstens einer der Nebenverteilerarme schwenkbar angeordnet ist.

5. Heißkanal-Verteileranordnung nach einem der vorstehenden Ansprüche 2 bis 4, **dadurch gekennzeichnet, dass** die wenigstens zwei Hauptverteilerarme (8, 9; 12, 13) jeweils um die sich quer zu ihnen erstreckende gemeinsame Schwenkachse verschwenkbar sind.

6. Heißkanal-Verteileranordnung nach einem der Ansprüche 2 bis 5, **dadurch gekennzeichnet, dass** der Verteilerabschnitt (5) mittig zwischen den Enden der Hauptverteilerarme (8, 9) des ersten Hauptverteilerblocks (6) an diesen angesetzt ist.

7. Heißkanal-Verteileranordnung nach einem der vorstehenden Ansprüche 2 bis 6, **dadurch gekennzeichnet, dass** jeder Hauptverteilerblock (10) wenigstens zwei Hauptverteilerarme (12, 13) aufweist und dass an jedem der Hauptverteilerarme (8, 9; 12, 13) der Hauptverteilerblöcke (6, 10) jeweils einer der Nebenverteilerblöcke, die Nebenverteilerarme (14 bis 17) ausbilden, angeordnet ist.

8. Heißkanal-Verteileranordnung nach einem der vorstehenden Ansprüche, **dadurch gekennzeichnet, dass** die Nebenverteilerarme (14 bis 17) um die zweite Schwenkachse (D2) an den Hauptverteilerarmen, vorzugsweise im Endbereich der Hauptverteilerarme (8, 9; 12, 13), verschwenkbar sind.

9. Heißkanal-Verteileranordnung nach einem der vorstehenden Ansprüche, **dadurch gekennzeichnet, dass** an den Enden der Nebenverteilerarme (14 bis 17) jeweils eine der Düsenanordnungen (18 bis 21) mit jeweils einer der Auslassöffnungen (3) ausgebildet ist.

10. Heißkanal-Verteileranordnung nach einem der vorstehenden Ansprüche, **dadurch gekennzeichnet, dass** die Düsenanordnungen (18 bis 21) jeweils von einer beweglichen Verschlußnadel (29) durchsetzt sind.

11. Heißkanal-Verteileranordnung nach einem der vorstehenden Ansprüche, **dadurch gekennzeichnet, dass** die Nebenverteilerarme (14 bis 17) jeweils einen Hülsenabschnitt (22 bis 25) aufweisen.

12. Heißkanal-Verteileranordnung nach einem der vorstehenden Ansprüche, **dadurch gekennzeichnet, dass** im Übergangs- bzw. Anlagebereich der Verteilerkanäle zwischen den Haupt- und Nebenverteilerarmen (8, 9; 12, 13; 14 - 17) und/oder zwischen den Hauptverteilerblöcken Dicht- und/oder Zentriermittel ausgebildet sind.

13. Heißkanalverteileranordnung nach Anspruch 12, **dadurch gekennzeichnet, dass** die Dicht- und/oder Zentriermittel wenigstens eines oder mehrere folgender Merkmale erfüllen:
- zwischen wenigstens einen der Haupt- und Nebenverteilerarme (8, 14) ist in deren Anlagebereich eine Schmelzeleithülse (30) gesetzt,;
- es ist ein hülsenartiger Vorsprung (31) an dem einen Arm ausgebildet, der in eine entsprechende Ausnehmung des anderen Arms der Haupt- und Nebenverteilerarme (8, 14) eingreift, und/oder
- zwischen wenigstens einen der Haupt- und Nebenverteilerarme (8, 14) ist in deren Anlagebereich ein Dichtring (32) ausgebildet.

14. Heißkanalverteileranordnung nach einem der vorstehenden Ansprüche, **dadurch gekennzeichnet, dass** beidseits der Gelenkbereiche zwischen den Haupt- und Nebenverteilerarmen und/oder an einem der Hauptverteilerarme eines oder mehrere Andruckelemente an die Haupt- und Nebenverteilerarme angesetzt ist/sind, des oder die ebene Anlageflächen ausbilden und zur Anlage an den Werkzeugelementen (W1, W2) ausgelegt sind.

15. Heißkanalverteileranordnung nach einem der vorstehenden Ansprüche, **dadurch gekennzeichnet, dass** die Andruckelemente jeweils ein Ring (38, 39) sind.

16. Heißkanalverteileranordnung nach einem der vorstehenden Ansprüche, **dadurch gekennzeichnet, dass** jeder bzw. der wenigstens eine Hauptverteilerarm (8, 9) eine Drehachse D1 aufweist, wobei er hinsichtlich der horizontalen thermischen Ausdehnung in der Position der Drehachse D1 fixiert ist und dass jeder bzw. der wenigstens eine Nebenverteilerarm (14 - 17) jeweils eine eigene Drehachse (D3) in der Achse der Düsenkörper (40) aufweist, so dass jeder Nebenverteilerarm (14 - 17) über den Düsenkörper (40) drehbar im Werkzeug fixiert ist.

17. Heißkanalverteileranordnung (1) nach einem der vorstehenden Ansprüche,
a) die zur Zuleitung einer Kunststoffschmelze von einer Angußöffnung (2) zu wenigstens zwei relativ zueinander und unabhängig voneinander beweglichen Düsenanordnungen (18 - 21) ausgebildet ist, die jeweils wenigstens eine Austrittsöffnung (3) an einem Düsenkörper (40) aufweisen,
b) wobei wenigstens ein um eine erste Drehachse (D1) verschwenkbarer Hauptverteilerblock (6, 10) vorgesehen ist,
c) wobei jeder Hauptverteilerblock jeweils wenigstens zwei Hauptverteilerarme (12, 13) aufweist,
d) wobei an den Hauptverteilerarmen (8, 9) jeweils wenigstens ein um eine zweite, parallel zur ersten Drehachse (D1) ausgerichteten Drehachse (D2) schwenkbarer Nebenverteilerblock mit wenigstens einem Nebenverteilerarm (14 - 17) vorgesehen ist,
e) wobei an jedem Nebenverteilerblock wenigstens eine der Düsenanordnungen (18 - 21) vorgesehen ist, und
f) wobei die wenigstens zwei Düsenanordnungen (18 - 21) mit den Düsenkörpern (40) auf einem durch die Schwenkbarkeit der Verteilerarme (8, 9; 12, 13; 14, 16; 15, 17) definierten Flächenbereich unabhängig voneinander positionierbar sind.

18. Heißkanal-Verteileranordnung nach Anspruch 17, **dadurch gekennzeichnet**, das der durch die Verteilerarme (8,9 ; 12, 13 ; 14, 16 ; 15, 17) definierte bzw. beschreibbare Flächenbereich der möglichen Positionen der Düsenanordnungen (18 - 21) kreisringförmig oder teilkreisringförmig ist.

19. Heißkanal-Verteileranordnung nach Anspruch 18, **dadurch gekennzeichnet**, das die Länge des Schmelzekanals (7, 27) einer zugeordneten Düsenkörper (40) unabhängig von der Entfernung zwischen der Heißkanaldüse (40) und der Angussöffnung (2) in jeder Position auf dem Flächenbereich gleich ist.

20. Heißkanal-Verteileranordnung nach einem der vorhergehenden Ansprüche, **dadurch gekennzeichnet**, das der Winkel im Betriebszustand zwischen Hauptverteilerarm (8, 9 ; 12, 13) und Nebenverteilerarm (14, 16 ; 15, 17) immer größer oder kleiner als 180 ° ist.

21. Heißkanal-Verteileranordnung nach einem der vorhergehenden Ansprüche, **dadurch gekennzeichnet, dass** die Heißkanal-Verteileranordnung für Werkzeuge mit verschiedenen Heißkanaldüsenabständen einsetzbar ist.

22. Heißkanal-Verteileranordnung nach einem der vorhergehenden Ansprüche, **dadurch gekennzeichnet**, das sich die zweite Drehachse (D2) durch thermische Ausdehnung wenigstens während der Aufheizphase räumlich verschiebt.

23. Heißkanal-Verteileranordnung nach einem der vorhergehenden Ansprüche, **dadurch gekennzeichnet**, das der Winkel (α2) im warmen Betriebszustand kleiner ist, als der Winkel (α1) im kühlen Zustand des Heißkanalsystems.

24. Heißkanal-Verteileranordnung nach einem der vorhergehenden Ansprüche, **dadurch gekennzeichnet**, das die Drehachsen (D1, D2, D3) im Wesentlichen parallel zueinander angeordnet sind.

25. Heißkanal-Verteileranordnung nach einem der vorhergehenden Ansprüche, **dadurch gekennzeichnet**, das der Winkel (α1, α2) des Hauptverteilerblocks (6, 10) zum Nebenverteilerarm (14, 15, 16, 17) sowohl ein stumpfer, rechter als auch ein spitzer Winkel sein kann.

## Claims

1. A hot channel distributor arrangement (1) for a hot channel system, which can be heated during a heating phase, with an adjacent die,
a) which is designed to supply a plastic melt from a pour-in opening (2) to at least two nozzle arrangements (18-21) which can be moved relative to each other and independently of one another, each having at least one outlet opening (3) in the region of the nozzle body (40),
b) wherein at least one main distributor block (6, 10) having at least one main distributor arm (8, 9; 12, 13) is provided, said main distributor block being rotatable around a first rotational axis (D1),
c) wherein at least one auxiliary distributor block is arranged on the at least one main distributor block (6, 10), said auxiliary distributor block forming at least one auxiliary distributor arm (14-17) and being rotatable around a second rotational axis,
d) wherein an angle (α) between the main distributor block (6, 10) and the auxiliary distributor block is adjustable,
e) wherein at least one of the nozzle arrangements (18-21) is provided on each auxiliary distributor arm (14, 17), and
**characterized in that**
f) after an adjusting process of the positions of the main and auxiliary distributor blocks in the cold state of the hot channel system already before heating to the operating temperature required for injection, both the first rotational axis (D1) of the main distributor block (8, 9) and the locations of the melt outlet, i.e. the nozzle bodies (40), but not the second rotational axes (D2) of the auxiliary distributor arms on the main distributor block (8, 9), are fixed in a stationary manner relative to the die or the surrounding die, wherein the angle (α1, α2) between the main distributor arm (8, 9; 12, 13) and auxiliary distributor arm (14, 16; 15, 17) changes due to thermal expansion at least during the heating phase, and
g) that the relative position between the at least one main and auxiliary distributor arm or the main and auxiliary distributor arms is fixed in a clamping fashion merely in the heated operating state of the hot channel system by thermal expansion directly in the region of the second rotational axis (D2).

2. A hot channel distributor arrangement according to claim 1, **characterized in that** two or more main distributor blocks (6, 10) are provided, and they are pivotable independently of each other and relative to each other.

3. A hot channel distributor arrangement according to claim 2, **characterized in that** each main distributor block (6, 10) comprises two main distributor arms (8, 9; 12, 13) which extend transversely to the first rotational axis towards opposite directions.

4. A hot channel distributor arrangement according to claim 3, **characterized in that** at least one each of the auxiliary distributor arms is arranged on each of the main distributor arms (8, 9; 12, 13).

5. A hot channel distributor arrangement according to one of the preceding claims 2 to 4, **characterized in that** the at least two main distributor arms (8, 9; 12, 13) are respectively pivotable around the common pivoting axis extending transversely thereto.

6. A hot channel distributor arrangement according to one of the claims 2 to 5, **characterized in that** the distributor section (5) is placed centrally on the main distributor block (6) between the ends of the main distributor arms (8, 9) thereof.

7. A hot channel distributor arrangement according to one of the preceding claims 2 to 6, **characterized in that** each main distributor block (10) comprises at least two main distributor arms (12, 13) and that one each of the auxiliary distributor blocks, which form the auxiliary distributor arms (14 to 17), is arranged on each of the main distributor arms (8, 9; 12, 13) of the main distributor blocks (6, 10).

8. A hot channel distributor arrangement according to one of the preceding claims, **characterized in that** the auxiliary distributor arms (14 to 17) can be pivoted around the second pivoting axis (D2) on the main distributor arms, preferably in the end region of the main distributor arms (8, 9; 12, 13).

9. A hot channel distributor arrangement according to one of the preceding claims, **characterized in that** one each of the nozzle arrangements (18 to 21) with one each of the outlet openings (3) is arranged on the ends of the auxiliary distributor arms (14 to 17).

10. A hot channel distributor arrangement according to one of the preceding claims, **characterized in that** the nozzle arrangements (18 to 21) are respectively penetrated by a movable sealing needle (29).

11. A hot channel distributor arrangement according to one of the preceding claims, **characterized in that** the auxiliary distributor arms (14 to 17) comprise one respective sleeve section (22 to 25).

12. A hot channel distributor arrangement according to one of the preceding claims, **characterized in that** sealing and/or centering means are arranged in the transitional or contact region of the distributor channels between the main and auxiliary distributor arms (8, 9; 12, 13; 14 to 17) and/or between the main distributor blocks.

13. A hot channel distributor arrangement according to claim 12, **characterized in that** the sealing and/or centering means fulfill at least one or several of the following features:
- a melt guide sleeve (30) is placed between at least one of the main and auxiliary distributor arms (8, 14) in their contact region;
- a sleeve-like projection (31) is formed on the one arm, which projection engages in a respective recess of the other arm of the main and auxiliary distributor arms (8, 14), and/or
- a sealing ring (32) is arranged between at least one of the main and auxiliary distributor arms (8, 14) in their contact region.

14. A hot channel distributor arrangement according to one of the preceding claims, **characterized in that** one or several pressing elements are placed against the main and auxiliary distributor arms on either side of the joint regions between the main and auxiliary distributor arms and/or on one of the main distributor arms, said pressing element or elements forming a flat contact surfaces and being arranged for contact on the die elements (W1, W2).

15. A hot channel distributor arrangement according to one of the preceding claims, **characterized in that** the pressing elements are each one ring (38, 39).

16. A hot channel distributor arrangement according to one of the preceding claims, **characterized in that** each or the at least one main distributor arm (8, 9) has a rotational axis (D1), wherein it is fixed in the position of the rotational axis (D1) with respect to the horizontal thermal expansion, and each or the at least one auxiliary distributor arm (14 to 17) respectively comprises a separate rotational axis (D3) in the axis of the nozzle body (40), so that each auxiliary distributor arm (14 to 17) is rotatably fixed via the nozzle body (40) in the die.

17. A hot channel distributor arrangement (1) according to one of the preceding claims,
a) which is designed to supply a plastic melt from a pour-in opening (2) to at least two nozzle arrangements (18-21) which can be moved relative to each other and independently of one another, each having at least one outlet opening (3) on a nozzle body (40),
b) wherein at least one main distributor block (6, 10) is provided which is rotatable around a first rotational axis (D1),
c) wherein each main distributor block comprises at least two main distributor arms (12, 13),
d) wherein at least one auxiliary distributor block with at least one auxiliary distributor arm (14-17) is arranged on the main distributor arms (8, 9), said auxiliary distributor block being pivotable around a second rotational axis (D2) aligned parallel to the first rotational axis (D1),
e) wherein at least one of the nozzle arrangements (18-21) is provided on each auxiliary distributor arm, and
f) wherein the at least two nozzle arrangements (18-21) with the nozzle bodies (40) can be positioned independently from each other on an area defined by the pivotability of the distributor arms (8, 9; 12, 13; 14, 16; 15, 17).

18. A hot channel distributor arrangement according to claim 17, **characterized in that** the area of the potential positions of the nozzle arrangements (18-21) which is defined or covered by the distributor arms (8, 9; 12, 13; 14, 16; 15, 17) has the shape of an annulus or graduated annulus.

19. A hot channel distributor arrangement according to claim 18, **characterized in that** the length of the melt channel (7, 27) of an associated nozzle body (40) is equal in each position on the area irrespective of the distance between the hot channel nozzle (40) and the pour-in opening (2).

20. A hot channel distributor arrangement according to one of the preceding claims, **characterized in that** the angle is always greater or lower than 180° in the operating state between main distributor arm (8, 9; 12, 13) and auxiliary distributor arm (14, 16; 15, 17).

21. A hot channel distributor arrangement according to one of the preceding claims, **characterized in that** the hot channel distributor arrangement can be used for dies with different hot channel nozzle distances.

22. A hot channel distributor arrangement according to one of the preceding claims, **characterized in that** the second rotational axis (D2) is displaced spatially by thermal expansion at least during the heat-up phase.

23. A hot channel distributor arrangement according to one of the preceding claims, **characterized in that** the angle (α2) is smaller in the hot operating state than the angle (α1) in the cold state of the hot channel system.

24. A hot channel distributor arrangement according to one of the preceding claims, **characterized in that** the rotational axes (D1, D2, D3) are arranged substantially parallel with respect to each other.

25. A hot channel distributor arrangement according to one of the preceding claims, **characterized in that** the angle (α1, α2) of the main distributor block (6, 10) to the auxiliary distributor arm (14, 15, 16, 17) can be an obtuse, right and also acute angle.

## Revendications

1. Ensemble distributeur à canaux chauds (1) pour un système à canaux chauds, qui peut être chauffé pendant une phase de montée en température, avec un moule adjacent à celui-ci,
a) qui est conçu pour amener une matière plastique fondue d'une ouverture d'injection (2) à au moins deux ensembles buse (18 - 21) mobiles l'un par rapport à l'autre et indépendamment l'un de l'autre qui présentent chacun au moins une ouverture de sortie (3) dans la zone d'un corps de buse (40),
b) dans lequel est prévu au moins un bloc distributeur principal (6, 10) pouvant pivoter autour d'un premier axe de rotation (D1) et comportant au moins un bras distributeur principal (8, 9 ; 12, 13),
c) dans lequel au moins un bloc distributeur secondaire pouvant pivoter autour d'un deuxième axe de rotation et formant au moins un bras distributeur secondaire (14 - 17) est disposé sur ledit au moins un bloc distributeur principal (6, 10),
d) dans lequel un angle (α) est réglable entre le bloc distributeur principal (6, 10) et le bloc distributeur secondaire,
e) dans lequel au moins un des ensembles buse (18 - 21) est prévu sur chaque bras distributeur secondaire (14, 17), et
caractérisé en ce
f) qu'après un processus de réglage des positions des blocs distributeurs principaux et secondaires à l'état froid du système à canaux chauds, le premier axe de rotation (D1) du bloc distributeur principal (8, 9) et les lieux de la sortie de matière fondue, c'est-à-dire les corps de buse (40), mais pas les deuxièmes axes de rotation (D2) des bras distributeurs secondaires sur le bloc distributeur principal (8, 9), sont respectivement fixés en position par rapport au moule ou dans le moule environnant avant un chauffage à la température de fonctionnement requise pour l'injection, l'angle (α1, α2) entre le bras distributeur principal (8, 9 ; 12, 13) et le bras distributeur secondaire (14, 16 ; 15, 17) changeant en raison de la dilatation thermique au moins pendant une phase de montée en température, et
g) que la position relative entre lesdits au moins un bras distributeurs principal et secondaire ou les bras distributeurs principaux et secondaires respectifs n'est fixée avec serrage par dilatation thermique directement dans la zone du deuxième axe de rotation (D2) qu'à l'état de fonctionnement chauffé du système à canaux chauds.

2. Ensemble distributeur à canaux chauds selon la revendication 1, **caractérisé en ce que** deux ou plusieurs blocs distributeurs principaux (6, 10) sont prévus et que ceux-ci peuvent pivoter indépendamment les uns des autres et les uns par rapport aux autres.

3. Ensemble distributeur à canaux chauds selon la revendication 2, **caractérisé en ce que** chaque bloc distributeur principal (6, 10) présente deux bras distributeurs principaux (8, 9 ; 12, 13) s'étendant dans des directions opposées transversalement au premier axe de rotation.

4. Ensemble distributeur à canaux chauds selon la revendication 3, **caractérisé en ce qu'**au moins un des bras distributeurs secondaires est disposé de manière pivotante sur chacun des bras distributeurs principaux (8, 9 ; 12, 13).

5. Ensemble distributeur à canaux chauds selon l'une des revendications 2 à 4 précédentes, **caractérisé en ce que** lesdits au moins deux bras distributeurs principaux (8, 9 ; 12, 13) peuvent pivoter chacun autour de l'axe de pivotement commun s'étendant transversalement à ceux-ci.

6. Ensemble distributeur à canaux chauds selon l'une des revendications 2 à 5, **caractérisé en ce que** la partie de distributeur (5) est placée sur le premier bloc distributeur principal (6), au centre entre les extrémités des bras distributeurs principaux (8, 9) de celui-ci.

7. Ensemble distributeur à canaux chauds selon l'une des revendications 2 à 6 précédentes, **caractérisé en ce que** chaque bloc distributeur principal (10) présente au moins deux bras distributeur principaux (12, 13) et que sur chacun des bras distributeurs principaux (8, 9 ; 12, 13) des blocs distributeurs principaux (6, 10) est disposé un des blocs distributeurs secondaires qui forment des bras distributeurs secondaires (14 à 17).

8. Ensemble distributeur à canaux chauds selon l'une des revendications précédentes, **caractérisé en ce que** les bras distributeurs secondaires (14 à 17) peuvent pivoter autour du deuxième axe de pivotement (D2) sur les bras distributeurs principaux, de préférence dans la zone d'extrémité des bras distributeurs principaux (8, 9 ; 12, 13).

9. Ensemble distributeur à canaux chauds selon l'une des revendications précédentes, **caractérisé en ce que** chaque fois un des ensembles buse (18 à 21) avec chaque fois une des ouvertures de sortie (3) est formé aux extrémités des bras distributeurs secondaires (14 à 17).

10. Ensemble distributeur à canaux chauds selon l'une des revendications précédentes, **caractérisé en ce que** les ensembles buse (18 à 21) sont traversés chacun par une aiguille de fermeture mobile (29).

11. Ensemble distributeur à canaux chauds selon l'une des revendications précédentes, **caractérisé en ce que** les bras distributeurs secondaires (14 à 17) présentent chacun une partie manchon (22 à 25).

12. Ensemble distributeur à canaux chauds selon l'une des revendications précédentes, **caractérisé en ce que** des moyens d'étanchéité et/ou de centrage sont formés dans la zone de transition ou de contact des canaux distributeurs entre les bras distributeurs principaux et secondaires (8, 9 ; 12, 13 ; 14 - 17) et/ou entre les blocs distributeurs principaux.

13. Ensemble distributeur à canaux chauds selon la revendication 12, **caractérisé en ce que** les moyens d'étanchéité et/ou de centrage présentent au moins une ou plusieurs des caractéristiques suivantes :
- un manchon de guidage de matière fondue (30) est placé entre au moins un des bras distributeurs principaux et secondaires (8, 14) dans leur zone de contact,
- une saillie en forme de manchon (31) est formée sur un bras, laquelle s'engage dans un évidement correspondant de l'autre bras des bras distributeurs principaux et secondaires (8, 14), et/ou
- une bague d'étanchéité (32) est formée entre au moins un des bras distributeurs principaux et secondaires (8, 14) dans leur zone de contact.

14. Ensemble distributeur à canaux chauds selon l'une des revendications précédentes, **caractérisé en ce que** des deux côtés des zones d'articulation entre les bras distributeurs principaux et secondaires et/ou sur un des bras distributeurs principaux, un ou plusieurs éléments de pression est/sont placé(s) sur les bras distributeurs principaux et secondaires, qui forment des surfaces de contact plates et sont conçus pour venir en contact avec les éléments de moule (W1,W2).

15. Ensemble distributeur à canaux chauds selon l'une des revendications précédentes, **caractérisé en ce que** les éléments de pression sont chaque fois une bague (38, 39).

16. Ensemble distributeur à canaux chauds selon l'une des revendications précédentes, **caractérisé en ce que** chaque bras distributeur principal (8, 9) ou ledit au moins un bras distributeur principal (8, 9) présente un axe de rotation D1 et est fixé dans la position de l'axe de rotation D1 en ce qui concerne la dilatation thermique horizontale, et que chaque bras distributeur secondaire ou ledit au moins un bras distributeur secondaire (14 - 17) présente son propre axe de rotation (D3) dans l'axe du corps de buse (40), de sorte que chaque bras distributeur secondaire (14 - 17) est fixé de manière rotative dans le moule par l'intermédiaire du corps de buse (40).

17. Ensemble distributeur à canaux chauds (1) selon l'une des revendications précédentes,
a) qui est conçu pour amener une masse plastique fondue d'une ouverture d'injection (2) à au moins deux ensembles buse (18 - 21) mobiles l'un par rapport à l'autre et indépendamment l'un de l'autre qui présentent chacun au moins une ouverture de sortie (3) sur un corps de buse (40),
b) dans lequel au moins un bloc distributeur principal (6, 10) pouvant pivoter autour d'un premier axe de rotation (D1) est prévu,
c) dans lequel chaque bloc distributeur principal présente au moins deux bras distributeurs principaux (12, 13),
d) dans lequel au moins un bloc distributeur secondaire pouvant pivoter autour d'un deuxième axe de rotation (D2) orienté parallèlement au premier axe de rotation (D1) et comportant au moins un bras distributeur secondaire (14 - 17) est prévu sur chacun des bras distributeurs principaux (8, 9),
e) dans lequel au moins un des ensembles buse (18 - 21) est prévu sur chaque bloc distributeur secondaire, et
f) dans lequel lesdits au moins deux ensembles buse (18 - 21) avec les corps de buses (40) peuvent être positionnés indépendamment l'un de l'autre sur une zone de surface définie par la possibilité de pivotement des bras distributeurs (8, 9 ; 12, 13 ; 14, 16 ; 15, 17).

18. Ensemble distributeur à canaux chauds selon la revendication 17, **caractérisé en ce que** la zone de surface définie ou pouvant être décrite par les bras distributeurs (8, 9 ; 12, 13 ; 14, 16 ; 15, 17) des positions possibles des ensembles buse (18 - 21) est de forme annulaire ou partiellement annulaire.

19. Ensemble distributeur à canaux chauds selon la revendication 18, **caractérisé en ce que** la longueur du canal de matière fondue (7, 27) d'un corps de buse associé (40) est la même dans n'importe quelle position sur la zone de surface, indépendamment de la distance entre la buse à canal chaud (40) et l'ouverture d'injection (2).

20. Ensemble distributeur à canaux chauds selon l'une des revendications précédentes, **caractérisé en ce que** l'angle à l'état de fonctionnement entre le bras distributeur principal (8, 9 ; 12, 13) et le bras distributeur secondaire (14, 16 ; 15, 17) est toujours supérieur ou inférieur à 180°.

21. Ensemble distributeur à canaux chauds selon l'une des revendications précédentes, **caractérisé en ce que** l'ensemble distributeur à canaux chauds peut être utilisé pour des moules avec différents espacements de buses à canal chaud.

22. Ensemble distributeur à canaux chauds selon l'une des revendications précédentes, **caractérisé en ce que** le deuxième axe de rotation (D2) se déplace spatialement par dilatation thermique au moins pendant la phase de montée en température.

23. Ensemble distributeur à canaux chauds selon l'une des revendications précédentes, **caractérisé en ce que** l'angle (α2) à l'état de fonctionnement chaud est inférieur à l'angle (α1) à l'état froid du système à canaux chauds.

24. Ensemble distributeur à canaux chauds selon l'une des revendications précédentes, **caractérisé en ce que** les axes de rotation (D1, D2, D3) sont disposés sensiblement parallèlement les uns aux autres.

25. Ensemble distributeur à canaux chauds selon l'une des revendications précédentes, **caractérisé en ce que** l'angle (α1, α2) du bloc distributeur principal (6, 10) par rapport au bras distributeur secondaire (14, 15, 16, 17) peut être un angle obtus, droit ou aigu.
